# EUROPÄISCHE PATENTANMELDUNG

(11) **EP 1 980 757 A2**
(43) Veröffentlichungstag der Anmeldung: **15.10.2008**
(21) Anmeldenummer: 08006561.8
(22) Anmeldetag: 31.03.2008
(51) Int. Cl.: F16B 11/00

(54) **Verfahren zum Herstellen einer Befestigungsanordnung eines Befestigungsdornes an einem dünnwandigen Bauteil**

(30) Priorität: 10.04.2007 DE 102007016851
(71) Anmelder: Böllhoff Verbindungstechnik GmbH, 33649 Bielefeld (DE)
(72) Erfinder: Stumpf, Michael, 33611 Bielefeld (DE); Schneller, Hartmut, 44892 Bochum (DE)
(74) Vertreter: Heyer, Volker

(57) **Zusammenfassung**

Beschrieben wird ein Verfahren zum Herstellen einer Befestigungsanordnung eines säulenförmigen Befestigungsdornes (10a,b,c,d) aus Kunststoff an einem dünnwandigen Bauteil (2a,b,c) aus Kunststoff, beispielsweise einem Gehäuse. Der Befestigungsdorn (10a,b,c,d) und das dünnwandige Bauteil (2a,b,c) werden getrennt voneinander hergestellt. Hierbei wird ein Befestigungselement (12a,b,c,d) in dem Befestigungsdorn integriert, und ein Ende des Befestigungsdornes wird als Fügeabschnitt (16a,b,c) ausgebildet. Ferner wird an einer Innenseite (6a,b,c) des Bauteils ein Fügeabschnitt (18a,b,c) gebildet, der an den Fügeabschnitt (16a,b,c) des Befestigungsdornes angepasst ist, um mit diesem eine Fügeverbindung zum Positionieren des Befestigungsdornes an dem Bauteil zu bilden. Der Fügeabschnitt (18a,b,c) des Bauteils (2a,b,c) und/oder der Fügeabschnitt (16a,b,c) des Befestigungsdornes (10a,b,c,d) werden nun mit einem nicht härtenden Klebstoff benetzt. Anschließend werden das Bauteil (2a,b,c) und der Befestigungsdorn (10a,b,c,d) zum Herstellen der Fügeverbindung gefügt und durch Lichthärten des Klebstoffes fest miteinander verbunden.

## Beschreibung

### Hintergrund der Erfindung

Die vorliegende Erfindung betrifft ein Verfahren zum Herstellen einer Befestigungsanordnung eines säulenförmigen Befestigungsdomes aus Kunststoff an einem dünnwandigen Bauteil aus Kunststoff, sowie eine Befestigungsanordnung hierfür.

Um dünnwandige Bauteile aus Kunststoff wie z.B. Gehäuse für Staubsauger, Vertikutierer oder dergl. befestigen zu können, werden üblicherweise beim Spritzgießen des dünnwandigen Bauteils sogenannte Befestigungsdome an der Innenseite des Bauteils angespritzt. Derartige Befestigungsdome haben eine Höhe von beispielsweise 30 bis 150 mm. In die Befestigungsdome werden in einem weiteren Arbeitsgang metallische Befestigungsteile in Form von z.B. Gewindebuchsen oder Gewindebolzen eingebracht. Bei diesem Herstellungsverfahren ergeben sich einige Probleme:
Bei einem ungünstigen Verhältnis der Wanddicken von dünnwandigem Bauteil und Befestigungsdom können sich auf der der Innenseite gegenüberliegenden Sichtseite des Gehäuses sogenannte Einfallstellen ergeben, die in den meisten Fällen nicht akzeptabel sind.
Da beim Spritzgießvorgang das Material für die Befestigungsdome zunächst in den Hohlraum für die Gehäusewand eingespritzt und von dort in die Hohlräume für die Befestigungsdome vorgedrückt werden muss, erfordert der Spritzvorgang relativ viel Zeit. Je größer die Abmessungen der Befestigungsdome sind, umso länger dauert der Spritzzyklus.
Um die Befestigungsdome am Gehäuse anspritzen zu können, ist ein vergleichsweise komplexes, aufwändiges und somit teures Spritzgusswerkzeug erforderlich.

### Zusammenfassung der Erfindung

Der vorliegenden Erfindung liegt die Aufgabe zugrunde, ein Verfahren zum Herstellen einer Befestigungsanordnung eines säulenförmigen Befestigungsdomes aus Kunststoff an einem dünnwandigen Bauteil aus Kunststoff sowie eine nach diesem Verfahren hergestellte Befestigungsanordnung zu schaffen, die sich durch hohe Wirtschaftlichkeit auszeichnen und die Gefahr von Einfallstellen auf der dem Befestigungsdom gegenüberliegenden Sichtseite des dünnwandigen Bauteils minimieren.

Diese Aufgabe wird durch das in Anspruch 1 definierte Verfahren gelöst.

Erfindungsgemäß werden der Befestigungsdom und das dünnwandige Bauteil getrennt voneinander hergestellt. Hierbei wird ein Befestigungselement in den Befestigungsdom integriert und ein Ende des Befestigungsdomes als Fügeabschnitt ausgebildet. Ferner wird an einer Innenseite des Bauteils ein Fügeabschnitt gebildet, der an den Fügeabschnitt des Befestigungsdomes angepasst ist, um mit diesem eine Fügeverbindung zum Positionieren des Befestigungsdomes an dem Bauteil bilden zu können.

Der Fügeabschnitt des Bauteils und/oder der Fügeabschnitt des Befestigungsdomes werden dann mit einem Klebstoff, vorzugsweise einem lichthärtenden Klebstoff, benetzt. Anschließend werden das Bauteil und der Befestigungsdom zum Herstellen der Fügeverbindung gefügt und durch Aushärten des Klebstoffes, insbesondere durch Lichtstrahlung einer bestimmten Wellenlänge, fest miteinander verbunden.

Der Fügeabschnitt des dünnwandigen Bauteils kann hierbei ohne Weiteres so ausgebildet werden, dass die Gefahr von Einfallstellen auf der Sichtseite des Bauteils vermieden wird. Da das Bauteil und die Befestigungsdome in getrennten Arbeitsgängen gefertigt werden, lässt sich die Fertigung des Bauteils entsprechend vereinfachen. Wird das Bauteil durch Spritzgießen hergestellt, so ermöglicht die Erfindung erheblich verkürzte Spritzzyklen und deutlich vereinfachte Spritzgusswerkzeuge.

Wenn der Befestigungsdom aus einem transluzenten, insbesondere transparenten Kunststoff hergestellt wird, wird vorzugsweise ein schnell härtender Klebstoff verwendet. Die Aushärtung des Klebstoffes wird dann mittels Lichtstrahlung einer bestimmten Wellenlänge erst initiiert, nachdem die Fügeverbindung zwischen dem Bauteil und dem Befestigungsdom hergestellt wurde.

Wenn der Befestigungsdom aus irgendwelchen Gründen nicht aus transluzentem Material hergestellt werden kann, wird zweckmäßigerweise ein langsam härtender Klebstoff verwendet. Die Aushärtung des Klebstoffes mittels Lichtstrahlung einer bestimmten Wellenlänge wird dann bereits initiiert, bevor die Fügeverbindung zwischen dem Bauteil und dem Befestigungsdom hergestellt wurde. Nach Herstellen der Fügeverbindung kann dann der Klebstoff allmählich vollständig aushärten.

Die Erfindung ist besonders geeignet für dünnwandige Bauteile in Form von Gehäusen z.B. für Staubsauger, Vertikutierer, kann jedoch auch bei beliebig anderen dünnwandigen Bauteilen wie z.B. Stoßfängern eingesetzt werden, deren Befestigung den Einsatz von Befestigungsdomen erfordert.

Das Befestigungselement kann aus einem anderen Material als der Befestigungdom bestehen und bei der Herstellung des Befestigungsdomes in diesen eingebettet werden. Stattdessen kann das Befestigungselement aus dem gleichen Material wie der Befestigungsdom bestehen und einstückig mit diesem hergestellt werden.

Das Befestigungselement ist beispielsweise eine Gewindebuchse, ein Gewindebolzen, ein Stehbolzen, ein Drahtgewindeeinsatz, etc., kann jedoch auch jedes beliebige Befestigungselement zum Herstellen einer Rastverbindung, einer Kupplung, eines Schnellverschlusses oder dergl. sein.

Weitere vorteilhafte Ausgestaltungen und Weiterbildungen der Erfindung sind in den abhängigen Ansprüchen definiert.

### Kurzbeschreibung der Zeichnung

Anhand der beigefügten Zeichnung werden Ausführungsbeispiele der Erfindung näher erläutert. Es zeigt:
Fig. 1 eine perspektivische Schnittansicht eines Befestigungsanordnung gemäß der Erfindung;
Fig. 2 eine der Fig. 1 entsprechende perspektivische Schnittdarstellung einer abgewandelten Ausführungsform der Erfindung;
Fig. 3 eine den Fig. 1 und 2 entsprechende Schnittdarstellung einer weiteren Ausführungsform der Erfindung;
Fig. 4 eine abgewandelte Ausführungsform des Befestigungsdomes in Fig. 3.

### Detaillierte Beschreibung von Ausführungsbeispielen der Erfindung

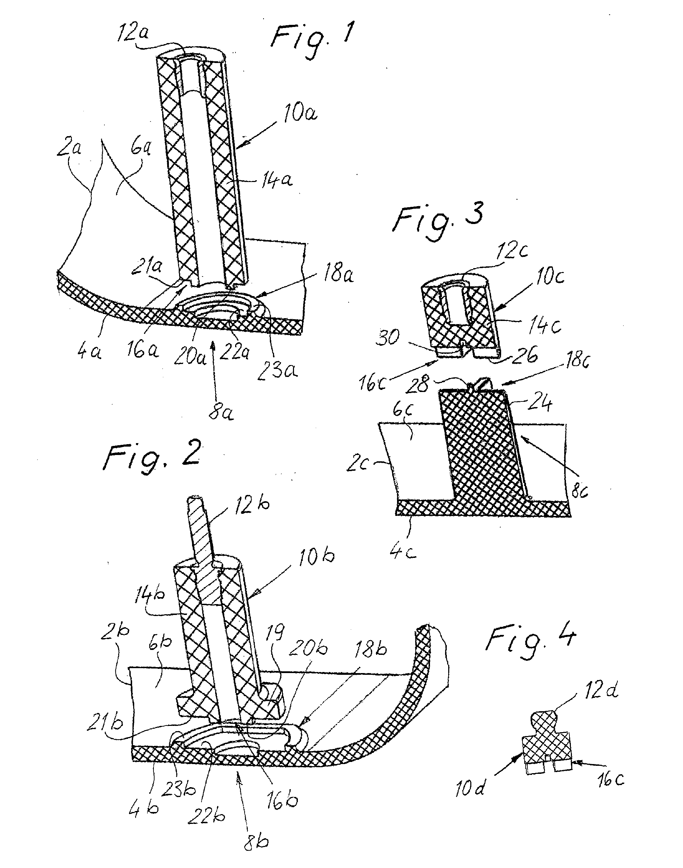

In Fig. 1 ist ein Teil eines dünnwandigen Bauteils 2a mit einer Sichtseite 4a (Außenseite) und einer Innenseite 6a angedeutet. An der Innenseite 6a des Bauteils 2a ist in einem Befestigungsbereich 8a ein Befestigungsdom 10a anzubringen, der in seinem oberen Endbereich mit einem Befestigungselement 12a versehen ist.

Bei dem dünnwandigen Bauteil 2a handelt es sich insbesondere um ein Gehäuse, wenngleich auch andere dünnwandige Bauteile in Frage kommen, wie bereits eingangs erläutert wurde.

Unter dem Begriff "Befestigungsdom" ist jedes beliebige säulenförmige Gebilde zu verstehen, das im montierten Zustand von der Innenseite 6 des Bauteils 2a vorsteht. Im dargestellten Ausführungsbeispiel besteht der Befestigungsdom 10a aus einem hülsenförmigen Körper 14a mit einer kreiszylindrischen Außenfläche und einer kreiszylindrischen Innenfläche. Es versteht sich, dass großvolumige Gehäuse bzw. großflächige Bauteile mit mehreren derartigen Befestigungsdomen versehen werden, die dazu dienen, das Bauteil 2a an anderen Bauteilen zu befestigen bzw. mit anderen Bauteilen zu verbinden. Die Geometrie sowie die Abmessungen, insbesondere die Höhe des Befestigungsdomes 10a werden anwendungsspezifisch gewählt.

Das Befestigungselement 12a ist im Ausführungsbeispiel der Fig. 1 eine Gewindebuchse, kann jedoch auch ein beliebig anderes Befestigungs- bzw. Verbindungsteil sein, wie in Verbindung mit den Figuren 2 bis 4 noch erläutert wird.

Der Befestigungsdom 10a ist an seinem von dem Befestigungselement 12a abgewandten Ende mit einem Fügeabschnitt 16a versehen, und das Bauteil 2a ist an der Innenseite 6a im Befestigungsbereich 8a mit einem Fügeabschnitt 18a versehen. Die Fügeabschnitte 16a und 18a sind in ihrer Geometrie aneinander angepasst, um im montierten Zustand eine Fügeverbindung zu bilden, durch die der Befestigungsdom 10a in seiner Lage relativ zu dem Bauteil 2a festgelegt wird.

Im Ausführungsbeispiel der Fig. 1 sind die Fügeabschnitte 16a und 18a als abgestufte Fügeflächen 20a, 21a bzw. 22a, 23a ausgebildet, die im montierten Zustand aneinander anliegen. Die Fügeabschnitte können auch mehrfach abgestuft werden. Im dargestellten Ausführungsbeispiel sind die Fügeflächen 20a bis 23a drehsymmetrisch ausgebildet; sie können jedoch auch drehasymmetrisch (Fig. 2) ausgebildet werden.

Der Befestigungsdom 10a ist an seinem in Fig. 1 unteren Ende, also im Bereich des Fügeabschnittes 16a, offen ausgebildet; er kann jedoch auch geschlossen ausgebildet werden (Fig. 3). Die Fügeabschnitte 16a, 18a haben im Ausführungsbeispiel der Fig. 1 einen maximalen Außendurchmesser, der gleich oder kleiner als der Außendurchmesser des Befestigungsdomes 10a ist. Auch hier ist jedoch eine andere geometrische Gestaltung möglich, wie Fig. 2 zeigt.

Es wird nun das Herstellen der Befestigungsanordnung des Befestigungsdomes 10a am Bauteil 2a im Befestigungsbereich 8a beschrieben. Wie eingangs erläutert wurde, wird das Bauteil 2a einerseits und der Befestigungsdom 10a mit dem Befestigungselement 12a andererseits getrennt voneinander hergestellt.

Das Bauteil 2a wird aus einem Kunststoff, insbesondere einem schlagzähen, abriebfesten amorphen Thermoplasten durch Spritzgießen hergestellt. Da der Fügeabschnitt 18a im Befestigungsbereich 8a nur eine geringfügige Materialanhäufung erfordert, besteht keine Gefahr von Einfallstellen auf der Sichtseite 4a des Bauteils 2a. Dies steht in Gegensatz zum eingangs geschilderten Stand der Technik, bei dem der Befestigungsdom gemeinsam mit dem dünnwandigen Bauteil spritzgegossen wird.

Der Befestigungsdom 10a wird ebenfalls aus einem Kunststoff, insbesondere einem schlagzähen, abriebfesten amorphen Thermoplasten durch Spritzgießen hergestellt, wobei beim Spritzgießvorgang das Befestigungselement 12a in das Material des Befestigungsdomes 10a eingebettet wird. Das Befestigungselement 12a besteht üblicherweise aus einem metallischen Werkstoff, kann jedoch auch aus einem anderen hochfesten Werkstoff wie z.B. faserverstärktem Kunststoff bestehen.

Die Herstellung des Bauteils 2a und des Befestigungsdomes 10a lässt sich aufgrund der relativ einfachen Geometrie dieser Teile sehr wirtschaftlich durchführen, da zum einen nur kurze Zykluszeiten erforderlich sind und zum anderen die Spritzgusswerkzeuge einfach gestaltet werden können.

Wenn das Bauteil 2a und der Befestigungsdom 10a auf diese Weise hergestellt worden sind, wird der Fügeabschnitt 16a des Befestigungsdomes 10a und/oder der Befestigungsabschnitt 18a des Bauteils 2a mit einer Klebstoffschicht versehen. Vorzugsweise wird ein lichtaktivierbarer Klebstoff verwendet, ein Klebstoff also, dessen Aushärtung durch Lichtstrahlung initiiert wird. Hierbei gibt es grundsätzlich zwei Vorgehensmöglichkeiten:
Gemäß der einen Möglichkeit wird der Befestigungsdom 10a aus einem transluzenten (strahlungsdurchlässigen), insbesondere transparenten (durchsichtigen) Kunststoff gefertigt, der für Licht bestimmter Wellenlänge durchlässig ist. Nach Benetzung der Fügeabschnitte mit dem lichtaktivierbaren Klebstoff wird der Befestigungsdom 10a mit seinem Fügeabschnitt 16a in den Fügeabschnitt 18a des Bauteils 2 eingesetzt, wodurch die (mechanische) Fügeverbindung zwischen diesen Teilen hergestellt wird. Mittels einer Lichtquelle (nicht gezeigt) wird nun Lichtstrahlung einer vorgegebenen Wellenlänge durch den Befestigungsdom 10a hindurch in den Bereich der Fügeflächen 20a bis 23a geschickt, um den Klebstoff zu aktivieren. Wenn ein schnell härtender Klebstoff (Sekundenkleber) verwendet wird, erfolgt dann die Aushärtung des Klebstoffes in wenigen Sekunden.

Wenn aus irgendwelchen Gründen der Befestigungsdom 10a nicht aus transluzentem bzw. transparentem Material hergestellt werden kann, wird gemäß der zweiten Möglichkeit wie folgt vorgegangen:
Es wird ein langsam härtender Klebstoff (Minutenkleber) auf die Fügeflächen des Befestigungsdomes 10a und des Bauteils 2a aufgetragen und vor dem Herstellen der Fügeverbindung durch Lichtstrahlung aktiviert, wodurch der relativ langsam erfolgende Aushärtungsvorgang initiiert wird. Unmittelbar danach werden der Befestigungsdom 10a und das Bauteil 2a an ihren Fügeabschnitten 16a, 18a gefügt. Der Klebstoff härtet dann - ohne weitere äußere Einflussnahme - innerhalb von z.B. 15 bis 30 min aus.

Es entsteht dann eine Befestigungsanordnung des Befestigungsdomes 10a an dem Bauteil 2a, deren Verbindungsfestigkeit vergleichbar ist mit derjenigen des Standes der Technik, bei dem das Bauteil und der Befestigungsdom gemeinsam spritzgegossen werden.

Das Ausführungsbeispiel der Fig. 2 entspricht weitgehend demjenigen der Fig. 1, wobei sich entsprechende Bauteile mit den gleichen Ziffern, jedoch mit den unterschiedlichen Buchstaben a und b bezeichnet wurden. Abweichend von Fig. 1 sind lediglich die Art des Befestigungselementes 12b (Gewindebolzen), die Höhe des Befestigungsdomes 10b und die Geometrie der Fügeabschnitte 16b, 18b.

Wie Fig. 2 zeigt, ist der Befestigungsdom 10b im Bereich seines Fügeabschnittes 16b mit einem Ringbund 19 versehen, so dass die Fügeflächen 20b bis 23b der Fügeabschnitte 16b, 18b größer als in Fig. 1 ausgebildet werden können. Der maximale Durchmesser der Fügeabschnitte 16b, 18b ist somit deutlich größer als der Außendurchmesser des Befestigungsdomes 10b.

Außerdem sind, wie ebenfalls bereits erwähnt wurde, die Fügeabschnitte 16b, 18b nicht drehsymmetrisch, sondern asymmetrisch ausgebildet. Die Fügeverbindung zwischen den Fügeabschnitten 16b und 18b sorgt somit nicht nur für eine Positionierung des Befestigungsdomes 10b quer zur Achse des Befestigungsdomes 10b (parallel zur Innenseite 6b des Bauteils 2b), sondern auch für eine Drehsicherung des Befestigungsdomes 10b.

Bei dem Ausfiihrungsbeispiel der Fig. 3 werden dieselben Bezugsziffern wie bei den vorhergehenden Ausführungsbeispielen verwendet und die Buchstaben a, b durch den Buchstaben c ersetzt. Während bei den Ausführungsbeispielen der Figuren 1 und 2 der Fügeabschnitt des Befestigungsdomes als Vorsprung und der Fügeabschnitt des Bauteils als Vertiefung ausgebildet sind, ist bei dem Ausführungsbeispiel der Fig. 3 der Fügeabschnitt 18c des Bauteils 2c als Vorsprung und der Fügeabschnitt 16c des Befestigungsdomes 10c als Vertiefung ausgebildet.

Genauer gesagt, besteht der Fügeabschnitt 18c des Bauteils 2c aus vier kreuzweise angeordneten Rippen 24, die auf der Innenseite 6c senkrecht stehen und an der Wand des Bauteils 2c einstückig angeformt sind. Der Fügeabschnitt 16c des Befestigungsdomes 10c besteht aus vier kreuzweise angeordneten Nuten 26, deren Geometrie an diejenige der Rippen 24 angepasst ist. Es versteht sich, dass die Anzahl der Rippen und Nuten auch anders gewählt werden kann.

Im Zentrum der Rippen 24 ist ein Zentrierzapfen 28 vorgesehen, dem ein entsprechendes Zentrierloch 30 im Befestigungsdom 10c zugeordnet ist. Die Zentrierung über den Zentrierzapfen 28 und das Zentrierloch 30 sowie ein definiertes Untermaß der Breite der Rippen 24 zur Breite der Nuten 26 sorgen für optimale und reproduzierbare Maße der den Klebstoff aufnehmenden Spalte zwischen den miteinander zu verbindenden Rippenflächen und Nutflächen.

Im Gegensatz zu dem Ausfiihrungsbeispielen der Figuren 1, 2 kommt es bei dem Ausfiihrungsbeispiel der Fig. 3 im Befestigungsbereich 8c zu einer etwas größeren Materialanhäufung gegenüber der Sichtseite 4c. Dennoch kann die Materialanhäufung deutlich geringer als im Stand der Technik ausgeführt werden, da die Wanddicke und Höhe der Rippen relativ klein gewählt werden können. Um bei der Ausführungsform der Fig. 3 Einfallstellen auf der Sichtseite 4c des Bauteils 2c zu vermeiden, sollte die Wanddicke der Rippen 24 kleiner/gleich 2/3 der Wanddicke des Bauteils 2c sein.

Die Herstellung der Befestigungsanordnung des Befestigungsdomes 10c an dem Bauteil 2c in Fig. 3 erfolgt in der gleichen Weise, wie dies im Zusammenhang mit den Ausführungsbeispielen der Figuren 1 und 2 beschrieben wurde.

Ein wichtiger Vorteil des Ausfiihrungsbeispieles der Fig. 3 besteht darin, dass der Befestigungsdom 10c mit dem Befestigungselement 12c als standardisiertes Teil ausgebildet werden kann, während eine Variation der Höhe der Befestigungsanordnung durch Änderungen der Höhe der Rippen 24 ermöglicht wird. Wie in Fig. 3 zu sehen ist, ist die Höhe der Rippen 24 um ein Mehrfaches größer als die Tiefe der Nuten 26. Die Höhe der Rippen 24 kann daher problemlos verkleinert oder vergrößert werden, ohne dass sich an der Verbindung zwischen dem Befestigungsdom 10c und dem Bauteil 2c etwas ändert. Das Ausführungsbeispiel der Fig. 3 zeichnet sich daher durch eine besonders hohe Wirtschaftlichkeit aus.

Bei den Ausführungsbeispielen der Figuren 1 bis 3 besteht das Befestigungselement 12a, 12b bzw. 12c aus einem anderen Material (insbesondere Metall) als der Befestigungsdom. Das Befestigungselement 12a, 12b bzw. 12c wird daher getrennt vom Befestigungsdom hergestellt und bei der Herstellung des Befestigungsdomes in diesen eingebettet.

Abweichend hiervon besteht die Möglichkeit, das Befestigungslement einstückig mit dem Befestigungsdom auszubilden. Ein entsprechendes Beispiel zeigt Fig. 4. Der Befestigungsdom 10d der Fig. 4 ist mit einem Befestigungselement 12d versehen, das als Gelenkkopf (Kugelkopf) für eine Gelenkpfanne (Kugelpfanne) einer nicht dargestellten Steckkupplung dient.

Wie in Fig. 4 zu sehen ist, ist das Befestigungselement 12d an dem Befestigungsdom 10d einstückig angeformt. D.h., dass der Befestigungsdom 10d und das Befestigungselement 12d aus demselben Material bestehen und gemeinsam hergestellt werden. Im Übrigen entspricht der Befestigungsdom 10d dem Ausführungsbeispiel in Fig. 3, d.h. dass er mit dem gleichen Befestigungsabschnitt 16c ausgebildet ist.

Es versteht sich, dass das am Befestigungsdom einstückig angeformte Befestigungselement auch in anderer Weise ausgebildet werden kann, beispielsweise als Gewindebolzen, Stehbolzen, Verschlussglied eines Schnellverschlusses, etc.

## Patentansprüche

1. Verfahren zum Herstellen einer Befestigungsanordnung eines säulenförmigen Befestigungsdomes (10a, b, c, d) aus Kunststoff an einem dünnwandigen Bauteil (2a, b, c) aus Kunststoff, bei welchem Verfahren:
der Befestigungsdom (10a, b, c, d) und das Bauteil getrennt voneinander hergestellt werden, wobei der Befestigungsdom mit einem Befestigungselement (12a, b, c, d) versehen und ein Ende des Befestigungsdomes als Fügeabschnitt (16a, b, c) ausgebildet wird und wobei ferner an einer Innenseite (6a, b, c) des Bauteils ein Fügeabschnitt (18a, b, c) gebildet wird, der an den Fügeabschnitt (16a, b, c) des Befestigungsdomes angepasst ist, um mit diesem eine Fügeverbindung zum Positionieren des Befestigungsdomes an dem Bauteil bilden zu können,
der Fügeabschnitt (18a, b, c) des Bauteils (2a, b, c) und/oder der Fügeabschnitt (16a, b, c) des Befestigungsdomes (10a, b, c, d) mit einem Klebstoff benetzt werden, und
anschließend das Bauteil (2a, b, c) und der Befestigungsdom (10a, b, c, d) zum Herstellen der Fügeverbindung gefügt und durch Aushärten des Klebstoffes fest miteinander verbunden werden.

2. Verfahren nach Anspruch 1, **dadurch gekennzeichnet, dass** als Klebstoff ein lichthärtender Klebstoff verwendet wird.

3. Verfahren nach Anspruch 2, **dadurch gekennzeichnet, dass**, wenn der Befestigungsdom (10a, b, c, d) aus einem transluzenten Kunststoff besteht, ein schnell härtender Klebstoff verwendet wird und die Aushärtung des Klebstoffes mittels Lichtstrahlung einer bestimmten Wellenlänge initiiert wird, nachdem die Fügeverbindung zwischen dem Bauteil (2a, b, c) und dem Befestigungsdom (10a, b, c) hergestellt wurde.

4. Verfahren nach Anspruch 2, **dadurch gekennzeichnet, dass**, wenn der Befestigungsdom (10a, b, c, d) aus einem nicht transluzenten Material besteht, ein langsam härtender Klebstoff verwendet wird und die Aushärtung des Klebstoffes mittels Lichtstrahlung einer bestimmten Wellenlänge initiiert wird, bevor die Fügeverbindung zwischen dem Bauteil (2a, b, c) und dem Befestigungsdom (10a, b, c) hergestellt wird.

5. Verfahren nach einem der vorhergehenden Ansprüche, **dadurch gekennzeichnet, dass** der Befestigungsdom (10a, b, c) eine hohlzylindrische Form hat und an dem als Fügeabschnitt ausgebildeten Ende offen oder geschlossen ist.

6. Verfahren nach Anspruch 5, **dadurch gekennzeichnet, dass** der Befestigungsdom (10a, b, c, d) drehsymmetrisch oder drehasymmetrisch ausgebildet ist.

7. Verfahren nach einem der vorhergehenden Ansprüche, **dadurch gekennzeichnet, dass** einer der Fügeabschnitte (18a, b, 16c) als Vertiefung und der andere Fügeabschnitt (16a, b, 18c) als Vorsprung ausgebildet ist.

8. Verfahren nach Anspruch 7, **dadurch gekennzeichnet, dass** der als Vertiefung ausgebildete Fügeabschnitt (18a, b) am Bauteil (2a, b) und der als Vorsprung ausgebildete Fügeabschnitt (16a, b) am Befestigungsdom (10a, b) vorgesehen ist.

9. Verfahren nach Anspruch 8, **dadurch gekennzeichnet, dass** die Fügeabschnitte (16a, b, 18a, b) abgestuft ausgebildet sind.

10. Verfahren nach den Ansprüchen 5 und 8, **dadurch gekennzeichnet, dass** der maximale Durchmesser der Fügeabschnitte (16a, b, 18a, b) kleiner oder größer als der maximale Durchmesser des Befestigungsdomes (10a, b) ist.

11. Verfahren nach Anspruch 7, **dadurch gekennzeichnet, dass** der als Vertiefung ausgebildete Fügeabschnitt (16c) am Befestigungsdom (10c, d) und der als Vorsprung ausgebildete Fügeabschnitt (18c) am Bauteil (2c) vorgesehen ist.

12. Verfahren nach Anspruch 11, **dadurch gekennzeichnet, dass** der Vorsprung aus mindestens einer am Bauteil (2c) angeformten Rippe (24) und die Vertiefung aus mindestens einer in dem Befestigungsdom (10c, d) gebildeten entsprechenden Nut (20) besteht.

13. Verfahren nach Anspruch 12, **dadurch gekennzeichnet, dass** mehrere kreuzweise angeordnete Rippen (24) und Nuten (26) vorgesehen sind.

14. Verfahren nach Anspruch 12 oder 13, **dadurch gekennzeichnet, dass** die Wandstärke der mindestens einen Rippe (24) kleiner als 2/3 der Wandstärke des Bauteils (2c) ist.

15. Verfahren nach einem der Ansprüche 12 bis 14, **dadurch gekennzeichnet, dass** an der mindestens einen Rippe (24) ein Zentrierzapfen (28) angeformt ist, der beim Herstellen der Fügeverbindung in ein Zentrierloch (30) des Befestigungsdomes (10c, d) eingeführt wird.

16. Verfahren nach einem der Ansprüche 12 bis 15, **dadurch gekennzeichnet, dass** die Höhe der mindestens einen Rippe (24) um ein Mehrfaches größer als die Tiefe der mindestens einen Nut (26) ist.

17. Verfahren nach einem der Ansprüche 11 bis 16, **dadurch gekennzeichnet, dass** bei Verwendung mehrerer Befestigungsdome (10c) alle Befestigungsdome gleiche Abmessungen haben und die Höhe der als Vorsprung ausgebildeten zugehörigen Fügeabschnitte (18c) des Bauteils (2c) an unterschiedliche Sollhöhen der betreffenden Befestigungsanordnungen (8c) angepasst wird.

18. Verfahren nach einem der vorhergehenden Ansprüche, **dadurch gekennzeichnet, dass** das Bauteil (2a, b, c) aus einem thermoplastischem Material durch Spritzgießen hergestellt wird.

19. Verfahren nach einem der vorhergehenden Ansprüche, **dadurch gekennzeichnet, dass** der Befestigungsdom (10a, b, c, d) aus thermoplastischem Material durch Spritzgießen hergestellt wird.

20. Verfahren nach einem der vorhergehenden Ansprüche, **dadurch gekennzeichnet, dass** das Befestigungselement (12a, b, c) aus einem anderen Material als der Befestigungsdom (10a, b, c) hergestellt und in das Material des Befestigungsdomes eingebettet wird.

21. Verfahren nach einem der Ansprüche 1 bis 19, **dadurch gekennzeichnet, dass** das Befestigungselement (12d) aus dem gleichen Material wie der Befestigungsdom (10d) besteht und einstückig mit diesem ausgebildet wird.
